# EUROPÄISCHE PATENTANMELDUNG

(11) **EP 1 473 535 A2**
(43) Veröffentlichungstag der Anmeldung: **03.11.2004**
(21) Anmeldenummer: 04008325.5
(22) Anmeldetag: 06.04.2004
(51) Int. Cl.: F28F 9/00

(54) **Wärmetauscher mit Dichtkörper**

(30) Priorität: 29.04.2003 DE 10319461
(71) Anmelder: Behr GmbH & Co., 70469 Stuttgart (DE)
(72) Erfinder: Andritter, Dirk, 74397 Ingersheim (DE); Schuller, Monika, 08028 Barcelona (ES)

(57) **Zusammenfassung**

Eine Einbaueinrichtung für eine Vorrichtung zum Austausch von Wärme mit einem Wärmetauscher und einem Dichtkörper, wobei der Dichtkörper wenigstens einen Befestigungsabschnitt und wenigstens einen Kontaktabschnitt mit einer Fahrzeugkarosserie aufweist, wobei der Befestigungsabschnitt in wenigstens einem Bereich mit einer am Wärmetauscher angeordneten Verbindungseinrichtung verbunden ist und der Befestigungsabschnitt gegenüber dem Kontaktabschnitt eine höhere Flexibilität aufweist. Des weiteren ist die Abdichtvorrichtung aus im wesentlichen einem, wenigstens teilweise homogenen elastischen Material hergestellt.

## Beschreibung

Die vorliegende Erfindung bezieht sich auf einen Wärmetauscher mit einem Dichtkörper, insbesondere in einem Kraftfahrzeug.

Kraftfahrzeuge weisen Wärmetauscher auf, welche beispielsweise dazu dienen, die Temperatur im Fahrzeuginnenraum zu regeln bzw. zu steuern oder um das Kühlwasser zu kühlen. Zu diesem Zweck wird die während der Fahrtbewegung des Fahrzeugs bzw. die mit Hilfe eines Lüfters in den Motorraum gelangende Luft genutzt.

Dabei besteht das Bedürfnis, einen möglichst großen Anteil dieser Luft durch die Wärmetauscher zu leiten und insbesondere zu verhindern, dass größere Anteile der Luft an den Wärmetauschern vorbeigeführt werden bzw. vorbei gelangen.

Zu diesem Zweck sind aus dem Stand der Technik Abdichtungen bekannt, welche die Übergangsbereiche zwischen den Wärmetauschern und dem Bereich des Fahrzeuges, in welchen sie eingebaut sind, abdichten. Aus dem Stand der Technik sind Abdichtungen bekannt, welche aus zwei oder mehreren verschiedenen Materialien bestehen, wobei es sich bei einem Material um ein Trägermaterial und bei einem anderen Material um ein Dichtmaterial handelt und solche Lösungen als Schichtwerkstoff aufgebaut sind. Diese Lösungen sind jedoch relativ aufwendig herzustellen und daher relativ teuer.

Der Erfindung liegt daher die Aufgabe zugrunde, eine gegenüber dem Stand der Technik kostengünstigere Abdichtung bereitzustellen.

Diese Aufgabe wird erfindungsgemäß durch eine Einbauanordnung zum Austausch von Wärme nach Anspruch 1 gelöst. Vorteilhafte Ausführungsformen der Abdichtung sind Gegenstand der Unteransprüche.

Der Gegenstand der Erfindung ist eine Einbauanordnung für eine Vorrichtung zum Austausch von Wärme mit einem Wärmetauscher und einem Dichtkörper, welcher wenigstens einen Befestigungsabschnitt und wenigstens einen Kontaktabschnitt mit einer Fahrzeugkarosserie aufweist. Dabei ist der Befestigungsabschnitt in wenigstens einem vorgegebenen Bereich an der Vorrichtung zum Austausch von Wärme bzw. am Wärmetauscher mit einer Verbindungseinrichtung verbunden. Der Kontaktabschnitt weist gegenüber dem Befestigungsabschnitt eine höhere Flexibilität auf. Dabei ist der Dichtkörper aus im wesentlichen einem wenigstens teilweise elastischen, im wesentlichen homogenen Material hergestellt.

Unter einem Befestigungsabschnitt des Dichtkörpers wird dabei ein Bereich oder Abschnitt verstanden, der fest, das heißt form- und/oder stoff- und/oder kraftschlüssig mit der Verbindungseinrichtung verbunden werden kann. Die Begriffe "Vorrichtung zum Austausch von Wärme" bzw. "Wärmetauscher" beziehen sich dabei auf die Vorrichtung in ihrer Gesamtheit, das heißt, einschließlich deren Gehäuse, sowie etwaiger Abdeckungen, Zargen und dergleichen.

Definitionsgemäß schließt der Begriff "Fahrzeugkarosserie" auch vordere, hintere und Seitenverkleidungen des Fahrzeugs ein.

Unter einem Kontaktabschnitt ist derjenige Bereich des Dichtkörpers zu verstehen, der bewirkt, dass ein durchströmendes Medium, insbesondere der Luft, nicht an der Vorrichtung zum Austausch von Wärme vorbei, sondern im wesentlichen durch diese hindurch geleitet wird.

Unter einer Verbindungseinrichtung wird im Rahmen der vorliegenden Erfindung jede Einrichtung bzw. jedes Element verstanden, an welchem der Befestigungsabschnitt befestigt werden kann. Dabei kann es sich beispielsweise um eine am Gehäuse der Vorrichtung zum Austausch von Wärme oder an deren Zarge angebrachte Einrichtung handeln.

In einer bevorzugten Ausführungsform verjüngt sich der Dichtkörper ausgehend vom Befestigungsabschnitt in Richtung des Kontaktabschnittes. Unter Verjüngen wird im Rahmen der vorliegenden Erfindung verstanden, dass die Abdichteinrichtung in wenigstens einer Vorzugsrichtung dünner wird. Unter einem Verjüngen würde man beispielsweise im Falle einer Fläche ein Abnehmen deren Dicke in einer bestimmten Vorzugsrichtung verstehen. Dabei kann sich die Dicke stetig oder stufenweise ändern, oder auch in einzelnen Abschnitten stets und in anderen stufenweise.

Unter einem homogenen Material ist zu verstehen, dass die Einrichtung zum Abdichten insbesondere nicht aus mehreren Schichten besteht. Jedoch kann das homogene Material aus unterschiedlichen Werkstoffen bzw. Substanzen zusammengestellt sein, wie dies zum Beispiel beim Einsatz von Polymeren bekannt ist.

In einer weiteren bevorzugten Ausführungsform weist der Dichtkörper eine im wesentlichen endseitig angeordnete Nut auf. Unter im wesentlichen endseitig wird dabei verstanden, dass sich die Nut bevorzugt in einem endseitigen Drittel des Dichtkörpers, besonders bevorzugt in einem endseitigen Fünftel des Dichtkörpers befindet. Anstelle der Nut kann jedoch die Vorrichtung zum Abdichten auch in anderer Weise mit der Verbindungseinrichtung verbunden sein, beispielsweise durch Verkleben, Verschrauben, Vernieten oder dergleichen.

In einer weiteren bevorzugten Ausführungsform ist die Verbindungseinrichtung ein Bestandteil der Einrichtung zum Austauschen von Wärme und wird im wesentlichen von der Nut des Dichtkörpers aufgenommen.

Unter einem Bestandteil der Vorrichtung zum Austauschen von Wärme wird dabei im wesentlichen jedes Bauteil der Vorrichtung zum Austauschen von Wärme verstanden, wobei es sich bevorzugt um das Gehäuse der Einrichtung sowie insbesondere, aber nicht ausschließlich, um Zargen handeln kann.

In einer weiteren Ausführungsform weist der Kontaktabschnitt im eingebauten Zustand wenigstens einen gekrümmten Abschnitt auf. Dabei weist der gekrümmte Abschnitt wenigstens abschnittsweise einen konstanten Krümmungsradius auf, dessen Konstruktionsmittelpunkt außerhalb der Vorrichtung zum Austausch von Wärme liegt.

Bei dem Konstruktionsmittelpunkt handelt es sich um einen geometrischen Punkt, der, würde man den Bereich mit konstantem Krümmungsradius zu einem Kreis vervollständigen, den Mittelpunkt dieses Kreises darstellen würde.

Unter außerhalb der Vorrichtung wird dabei verstanden, dass der Konstruktionsmittelpunkt außerhalb eines von sämtlichen Außenwänden der Vorrichtung zum Austausch von Wärme aufgespannten Raumes liegt.

In einer weiteren bevorzugten Ausführungsform weist der Befestigungsabschnitt abschnittsweise eine erweiterte Öffnung auf, welche als Fixierhilfseinrichtung dient.

Unter erweitert wird dabei verstanden, dass ein insbesondere als Nut ausgebildeter Endabschnitt des Befestigungsabschnittes in einer Vorzugsrichtung erweitert, bevorzugt verbreitert, ist.

In einer weiteren bevorzugten Ausführungsform steht der Kontaktabschnitt insbesondere in einem endseitigen Abschnitt mit einer Innenkontur des Fahrzeugs bzw. der Karosserie in einem vorgegebenen Bereich in Berührung. Unter einem In-Berührung-Stehen wird dabei ein Anliegen wenigstens eines Flächensegmentes des Kontaktabschnittes an wenigstens einem Flächensegment der Innenkontur des Fahrzeugs bzw. der Karosserie verstanden.

Bei der Innenkontur des Fahrzeuges kann es sich um ein beliebiges Bestandteil des Fahrzeuges handeln, wobei jedoch die nach außen weisenden Bereiche, das heißt die vom Fahrzeug weg weisenden Bereiche, ausgeschlossen sind.

In einer weiteren bevorzugten Ausführungsform weist der Dichtkörper eine Länge von 100 bis 900 mm, bevorzugt von 200 bis 700 mm und besonders bevorzugt von 300 bis 500 mm auf.

Bevorzugt ist der Dichtkörper aus einem Material hergestellt, welches aus einer Gruppe ausgewählt ist, welche synthetische Kunststoffe, Polykondensate, Polymerisate, Polyadditive, Polypropylen, Polyethylen, insbesondere Duroplaste oder Thermoplaste, Polyurethane, Harze, diese Materialen mit oder ohne Zusatzstoffe, wie beispielsweise Ruß, enthält.

In einer weiteren Ausführungsform weist der vorgegebene Berührbereich zwischen der Einrichtung und der Innenkontur des Fahrzeuges eine Länge zwischen 10 mm und 100 mm, bevorzugt zwischen 20 mm und 70 mm und besonders bevorzugt zwischen 30 mm und 50 mm auf.

In einer weiteren bevorzugten Ausführungsform weist der Dichtkörper wenigstens eine Öffnung auf. Diese Öffnung weist dabei einen vorgegebenen geometrischen Querschnitt auf und dient dazu, einzelne Bauteile, insbesondere der Einrichtung zum Austausch von Wärme, durch sie hindurchzuführen, wie beispielsweise Zuführungen für ein Kältemittel oder dergleichen. Dies wird unter Bezugnahme auf die Figuren genauer erläutert.

In einer weiteren bevorzugten Ausführungsform erstreckt sich der Dichtkörper im wesentlichen entlang wenigstens einer Längs- und/oder Breitseite der Einrichtung zum Austausch von Wärme. Bevorzugt kann der Dichtkörper zum Austausch von Wärme auch entlang beider Längs- und beider Breitseiten einen erfindungsgemäßen Dichtkörper aufweisen.

In einer weiteren bevorzugten Ausführungsform sind mehrere erfindungsgemäße Vorrichtungen in bezüglich einander vorgegebener Lage angeordnet.

In einer weiteren bevorzugten Ausführungsform berührt der Kontaktabschnitt das Front-Ende des Kraftfahrzeuges. Unter dem Front-Ende wird dabei die vordere Verkleidung des Kraftfahrzeuges verstanden. Der Kontaktabschnitt kann jedoch auch einen weiteren Bereich, wie beispielsweise einen Bereich des Kühlers des Kraftfahrzeuges, berühren.

Weitere Vorteile und Ausführungsformen ergeben sich aus den beigefügten Zeichnungen. Darin zeigen:
- Fig. 1: eine Gesamtdarstellung des vorderen inneren Bereichs eines Kraftfahrzeuges mit einer Vorrichtung zum Austausch von Wärme und einem erfindungsgemäßen Dichtkörper;
- Fig. 2: einen Ausschnittsbereich aus Fig. 1 und eine Vorrichtung zum Austausch von Wärme, die mit einem erfindungsgemäßen Dichtkörper ausgestattet ist; und
- Fig. 3: eine Detaildarstellung des erfindungsgemäßen Dichtkörpers in einer weiteren Darstellung.

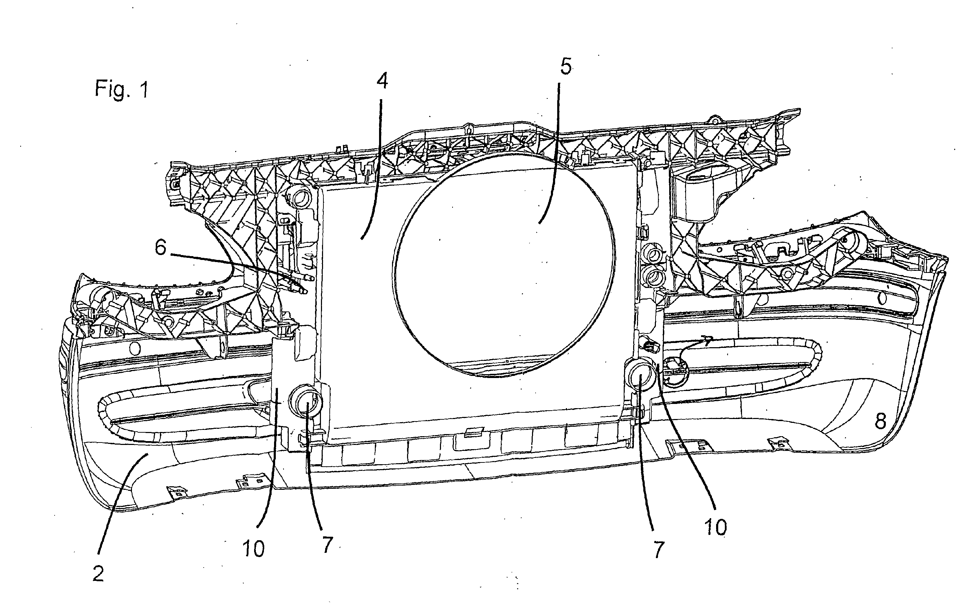

Fig. 1 zeigt eine sogenannte vordere Verkleidung oder eine vordere Abdekkung 2 eines Kraftfahrzeuges, in welche eine Vorrichtung zum Austausch von Wärme eingebaut ist.

Das Bezugszeichen 4 bezieht sich auf eine Rahmeneinrichtung bzw. eine Zarge, welche die Einrichtung zum Austausch von Wärme zumindest teilweise abdeckt. In dem im wesentlichen kreisförmigen Ausschnitt 5 wird ein (nicht gezeigter) Lüfter für die Vorrichtung zum Austausch von Wärme eingebaut.

Das Bezugszeichen 7 kennzeichnet einen Anschluss, über welchen ein Kältemittel der Vorrichtung zum Austausch von Wärme zugeführt bzw. aus dieser abgeführt werden kann. Ebenso kennzeichnet das Bezugszeichen 6 eine Einrichtung zum Zuführen bzw. Abführen eines Kältemittels in die bzw. aus der Vorrichtung zum Austausch von Wärme.

Das Bezugszeichen 10 kennzeichnet einen erfindungsgemäßen Dichtkörper für die Vorrichtung zum Austausch von Wärme. In der Darstellung ist der erfindungsgemäße Dichtkörper jeweils auf der linken und rechte Seite der Einrichtung zum Austausch von Wärme angebracht. Daneben kann jedoch der Dichtkörper auch oberhalb und/oder unterhalb der Vorrichtung zum Austausch von Wärme angeordnet sein.

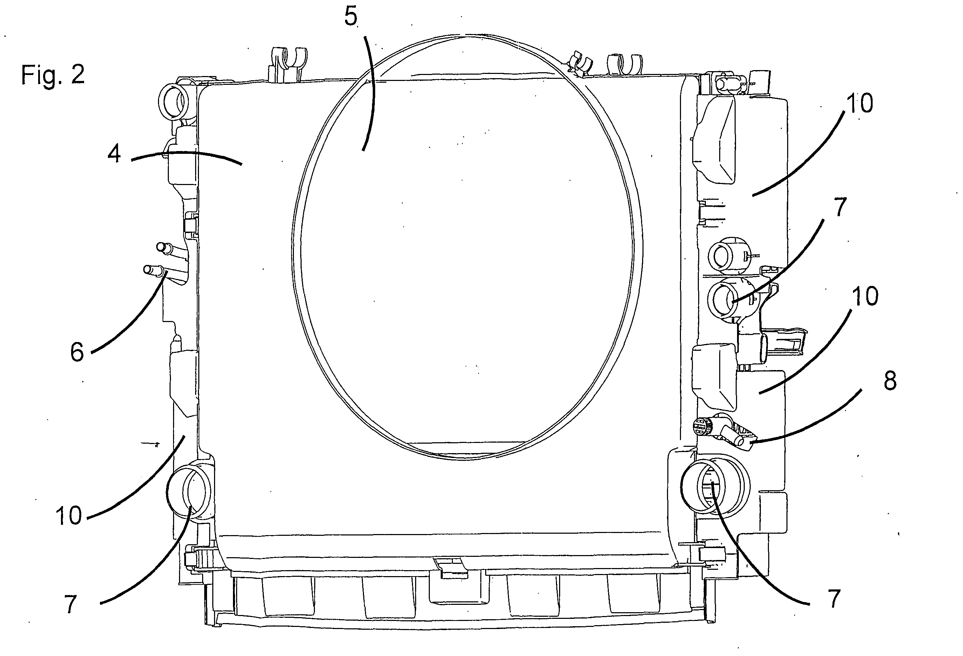

Fig. 2 zeigt einen Teilbereich aus Fig. 1, das heißt die Vorrichtung zum Austausch von Wärme mit den erfindungsgemäßen Dichtkörpern. Dabei bezieht sich das Bezugszeichen 5 wieder auf eine Öffnung, in welche ein Lüfter eingebaut werden kann. Das Bezugszeichen 4 kennzeichnet die Abdekkung oder Zarge, an welcher die erfindungsgemäße Abdichtung 10 angebracht ist. In Fig. 2 erkennt man, dass mehrere Dichtkörper 10 vorgesehen sind. Die Dichtkörper können nur einzelne Teilbereiche entlang der Seitenlinien der Vorrichtung zum Austausch von Wärme abdecken, oder auch eine oder mehrere gesamte Längs- und/oder Breitseiten.

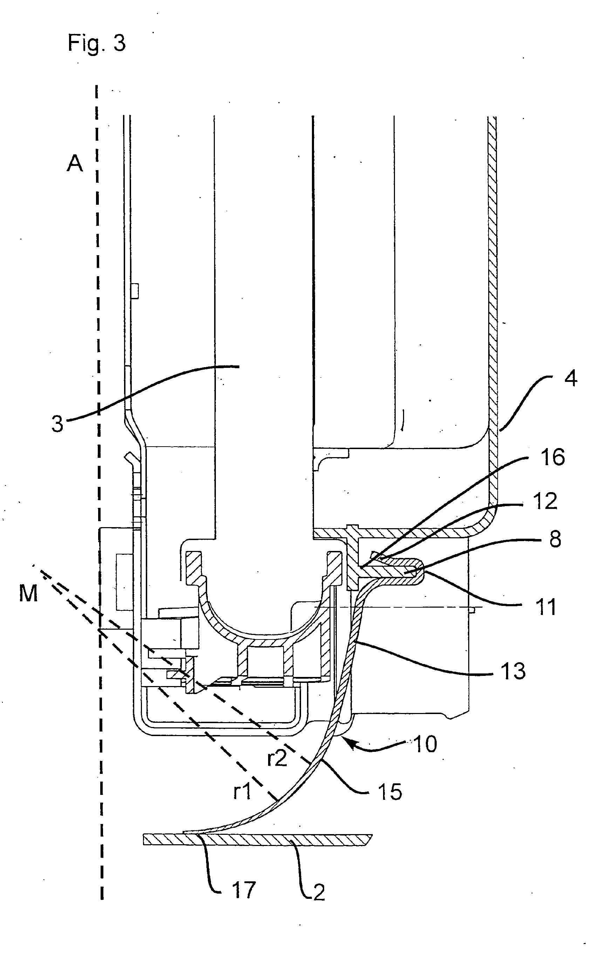

Fig. 3 zeigt einen Ausschnitt der Vorrichtung zum Austausch von Wärme in einer Draufsicht. Das Bezugszeichen 3 bezieht sich auf die Vorrichtung zum Austausch von Wärme, welche mit einer Abdeckung oder Zarge, welche in ihrer Gesamtheit mit dem Bezugszeichen 4 gekennzeichnet ist, ausgestattet ist. Die Zarge 4 weist eine Verbindungseinrichtung 16 auf, welche zur Befestigung der Dichtkörper 10 dient. Das Bezugszeichen 11 bezieht sich auf einen endseitigen Bereich des Dichtkörpers 10, der hier als Nut ausgebildet ist.

Das Bezugszeichen 12 bezeichnet eine Fixierhilfseinrichtung. Dabei ist ein Endabschnitt des Dichtkörpers gegenüber dem als Nut ausgebildeten Befestigungsabschnitt nach außen gebogen bzw. gekrümmt, um auf diese Weise den Dichtkörper leichter über die Verbindungseinrichtung 16 schieben bzw. drücken zu können. Zusätzlich können die Abdichteinrichtung 10 und die Verbindungseinrichtung 16 miteinander verklebt werden.

Das Bezugszeichen 13 kennzeichnet den Befestigungsabschnitt, der an seinem Endabschnitt die Nut 11 aufweist.

Das Bezugszeichen 15 kennzeichnet den Kontaktabschnitt des Dichtkörpers. Dieser Kontaktabschnitt ist in dem hier gezeigten eingebauten Zustand wenigstens teilweise gekrümmt. Dabei ist ein zweiter Endabschnitt 17 des Kontaktabschnittes vorgesehen, welcher an einem vorbestimmten Bereich des Kraftfahrzeuges bzw. der Karosserie 2 anliegt. Dabei kann es sich beispielsweise um eine Innenkontur in der vorderen Verkleidung des Fahrzeuges handeln. Der Kontaktabschnitt 15 der Abdichteinrichtung 10 bewirkt, dass im wesentlichen keine Luft zwischen dem Bereich 2 und der insgesamt mit 3 bezeichneten Vorrichtung zum Austausch von Wärme strömen kann.

Die Abdichtvorrichtung erstreckt sich in der Zeichnung in einer senkrecht zur Blattebene stehenden Richtung.

Des weiteren ist zu erkennen, dass sich die Abdichteinrichtung in Richtung des Kontaktabschnittes und insbesondere in Richtung des Endbereiches 17 verjüngt, das heißt, deren Dicke nimmt in Richtung des Endbereiches 17 ab. Auf diese Weise kann erreicht werden, dass die Abdichteinrichtung, obwohl nur aus einem homogenen Material bestehend, weiterhin elastisch gehalten werden kann. Diese Elastizität bzw. Flexibilität kann jedoch auch dadurch erreicht werden, dass in dem Kontaktabschnitt Kerben angebracht werden.

Die beiden mit r1 und r2 gekennzeichneten Linien zeigen zwei (geometrische) Radien, welche sich von einem Abschnitt der Abdichtvorrichtung aus in Richtung des Konstruktionsmittelpunkts M erstrecken. Würde man den zwischen den beiden Radien r1 und r2 liegenden Bereich der Abdichteinrichtung 10 zu einem Vollkreis ergänzen, so wäre der Punkt M dessen Mittelpunkt.

Man erkennt, dass der Konstruktionsmittelpunkt M außerhalb der Vorrichtung zum Austausch von Wärme liegt. Dabei wird davon ausgegangen, dass die Vorrichtung zum Austausch von Wärme nach links hin durch die Ebene A begrenzt wird. Bevorzugt liegt die Schar der Konstruktionsmittelpunkte M, die an jeweils unterschiedlichen Abschnitten des Kontaktabschnittes der Abdichteinrichtung gebildet werden können, im wesentlichen außerhalb der Vorrichtung zum Austausch von Wärme, das heißt in der Zeichnung links von der mit A gekennzeichneten Ebene, und/oder oberhalb der Einrichtung zum Austausch von Wärme.

## Patentansprüche

1. Einbauanordnung für eine Vorrichtung zum Austausch von Wärme mit einem Wärmetauscher und einem Dichtkörper, wobei der Dichtkörper wenigstens einen Befestigungsabschnitt und einen Kontaktabschnitt mit einer Fahrzeugkarosserie aufweist, **dadurch gekennzeichnet, dass** der Befestigungsabschnitt in wenigstens einem Bereich mit einer am Wärmetauscher angeordneten Verbindungseinrichtung verbunden ist, der Kontaktabschnitt gegenüber dem Befestigungsabschnitt eine höhere Flexibilität aufweist, und der Dichtkörper aus im wesentlichen einem wenigstens teilweise elastischen im wesentlichen homogenen Material hergestellt ist.

2. Anordnung nach Anspruch 1, **dadurch gekennzeichnet, dass** sich der Dichtkörper ausgehend vom Befestigungsabschnitt in Richtung des Kontaktierungsabschnitts in wenigstens einem Abschnitt verjüngt.

3. Anordnung nach Anspruch 1, **dadurch gekennzeichnet, dass** der Befestigungsabschnitt eine im wesentlichen endseitig angeordnete Nut aufweist.

4. Anordnung, insbesondere nach wenigstens einem der vorangegangenen Ansprüche, **dadurch gekennzeichnet, dass** die Verbindungseinrichtung ein Bestandteil der Vorrichtung zum Austausch vom Wärme ist und im wesentlichen von der Nut des Befestigungsabschnitts aufgenommen wird.

5. Anordnung, insbesondere nach wenigstens einem der vorangegangenen Ansprüche, **dadurch gekennzeichnet, dass** der Kontaktabschnitt wenigstens im eingebauten Zustand wenigstens einen gekrümmten Abschnitt aufweist.

6. Anordnung, insbesondere nach wenigstens einem der vorangegangenen Ansprüche, **dadurch gekennzeichnet, dass** der gekrümmte Bereich wenigstens abschnittsweise einen konstanten Krümmungsradius aufweist, dessen Konstruktionsmittelpunkt außerhalb der Vorrichtung zum Austausch von Wärme liegt.

7. Anordnung, insbesondere nach wenigstens einem der vorangegangenen Ansprüche, **dadurch gekennzeichnet, dass** der Befestigungsabschnitt abschnittsweise eine erweiterte Öffnung aufweist, welche als Fixierhilfseinrichtung dient.

8. Anordnung, insbesondere nach wenigstens einem der vorangegangenen Ansprüche, **dadurch gekennzeichnet, dass** der Kontaktabschnitt insbesondere in einem endseitigen Abschnitt mit einer Innenkontur des' Fahrzeugs bzw. der Fahrzeugkarosserie in einem vorgegebenen Bereich in Berührung steht.

9. Anordnung, insbesondere nach wenigstens einem der vorangegangenen Ansprüche, **dadurch gekennzeichnet, dass** die Einrichtung zum Austausch von Wärme eine Länge von 100 bis 900 mm, bevorzugt von 200 bis 700 mm und besonders bevorzugt von 300 bis 500 mm aufweist.

10. Anordnung, insbesondere nach wenigstens einem der vorangegangenen Ansprüche, **dadurch gekennzeichnet, dass** der Dichtkörper aus einem Material hergestellt ist, welches aus einer Gruppe ausgewählt ist, welches synthetische Kunststoffe, Polykondensate, Polymerisate, Polyaddukte, Polypropylen (PP), Polyethylen, Duroplaste oder Thomoplaste, Polyurethane, Harze oder dergleichen, mit oder ohne Zusatzstoffe, enthält.

11. Anordnung, insbesondere nach wenigstens einem der vorangegangenen Ansprüche, **dadurch gekennzeichnet, dass** der vorgegebene Berührbereich zwischen der Einrichtung und der Innenkontur des Fahrzeuges zwischen 10 und 100 mm, bevorzugt zwischen 20 und 70 mm und besonders bevorzugt zwischen 30 und 50 mm liegt.

12. Anordnung, insbesondere nach wenigstens einem der vorangegangenen Ansprüche, **dadurch gekennzeichnet, dass** der Dichtkörper wenigstens eine Öffnung aufweist.

13. Anordnung, insbesondere nach wenigstens einem der vorangegangenen Ansprüche, **dadurch gekennzeichnet, dass** der Dichtkörper sich im wesentlichen entlang wenigstens einer Längs- und/oder Breitseite der Vorrichtung zum Austausch von Wärme erstreckt.

14. Anordnung, insbesondere nach wenigstens einem der vorangegangenen Ansprüche, **dadurch gekennzeichnet, dass** der Kontaktabschnitt das Frontende des Kraftfahrzeuges berührt.

15. Anordnung, insbesondere nach wenigstens einem der vorangegangenen Ansprüche, **dadurch gekennzeichnet, dass** an der Vorrichtung zum Austausch von Wärme mehrere Dichtkörper nach wenigstens einem der vorangegangenen Ansprüche in einer vorgegebenen Position angeordnet sind.
